# EUROPÄISCHE PATENTSCHRIFT

(11) **EP 2 168 714 B1**
(45) Veröffentlichungstag und Bekanntmachung des Hinweises auf die Patenterteilung: **19.06.2013**
(21) Anmeldenummer: 08016872.7
(22) Anmeldetag: 25.09.2008
(51) Int. Cl.: B23Q 7/04, B23Q 7/00, B27M 1/08, B23Q 1/66

(54) **Förder- und Bearbeitungseinrichtung**
Conveying and machining device
Dispositif de transport et d'usinage

(43) Veröffentlichungstag der Anmeldung: 31.03.2010
(73) Patentinhaber: Weeke Bohrsysteme GmbH, 33442 Herzebrock-Clarholz (DE)
(72) Erfinder: Austermeier, Martin, 33397 Rietberg (DE); Voss, Hugo, 33449 Langenberg (DE)
(74) Vertreter: HOFFMANN EITLE

(56) Entgegenhaltungen:
- EP-A- 0 267 461
- EP-A- 1 716 991
- EP-A- 1 964 653
- DE-A1- 10 026 069
- DE-A1-102004 055 254

## Beschreibung

### Gebiet der Erfindung

Die vorliegende Erfindung betrifft eine kombinierte Förder-und Bearbeitungseinrichtung für im Wesentlichen plattenförmige Werkstücke aus bevorzugt Holz, Holzwerkstoffen, Kunststoff oder Metallen, wobei die Werkstücke in erster Linie an ihren Werkstückoberflächen bearbeitet werden. Die Bearbeitungsmöglichkeiten betreffen dabei Bohren, Fräsen und das Veredeln der Werkstücke mit Beschlägen (Scharnieren/Funktionsbauteilen).

### Stand der Technik

Im Stand der Technik sind kombinierte Förder- und Bearbeitungseinrichtungen für plattenförmige Werkstücke bekannt, bei denen die Werkstücke an einem Ende von einer Fördereinrichtung aufgenommen werden und dann sukzessive zu verschiedenen Bearbeitungsstationen gefördert werden. Dabei werden die Werkstücke mittels Greifelementen gespannt und im Bearbeitungsbereich abgelegt oder durch eine zusätzliche Greifeinrichtung gespannt. Sobald die Bearbeitung beendet ist, nimmt die Greifeinrichtung des Förderelements das Werkstück wieder auf und fördert es weiter auf der Bearbeitungsstraße.

Allerdings haben solche bekannten, kombinierten Beförder- und Bearbeitungseinrichtungen den Nachteil, dass unnötige Nebenzeiten entstehen, wenn ein Werkstück von einer Bearbeitungsstation zur Nächsten und/oder zur Ausförderstation geführt wird. Weitere Nebenzeiten entstehen dadurch, dass die Fördereinrichtung ungenutzt einen langen Weg zum Ort der Beschickung mit einem weiteren Werkstück durchführen muss. Oft müssen auch in diesem Fall eventuelle weitere Fördereinrichtungen oder Bearbeitungswerkzeuge aus dem Förderraum der ersten rückzuführenden Fördereinrichtung entfernt werden.

Als weiterer Stand der Technik ist das Dokument DE 100 26 069 A1 gemäβ dem Oberbegriff des Anspruchs 1 bekannt. Darin wird eine Bearbeitungsvorrichtung mit einem Spanntisch oder mehreren Spanntischen offenbart, wobei der Spanntisch als Wechseltisch ausgeführt ist. Der oder die Wechseltische befinden sich abwechselnd in Rüstposition und Bearbeitungsposition.

### Inhalt der Erfindung

Es ist daher Aufgabe der Erfindung, eine kombinierte Förder - und Bearbeitungseinrichtung bereitzustellen, die bei geringem Platzbedarf die Nebenzeiten der Bearbeitungs- und Förderaggregate reduziert.

Diese Aufgabe wird erfindungsgemäß durch eine kombinierte Förder- und Bearbeitungseinrichtung gemäß Anspruch 1 sowie ein Verfahren nach Anspruch 7 gelöst. Besonders vorteilhafte Weiterbildungen der Erfindung sind Gegenstand der abhängigen Ansprüche.

Der Erfindung liegt der Gedanke zugrunde, eine kombinierte Förder- und Bearbeitungseinrichtung mit einer Fördereinrichtung, welche aus einem Längsträger und darin geführten zumindest zwei Führungselementen besteht, sowie verschiedene Stationen bereitzustellen. In der erfindungsgemäßen kombinierten Förder- und Bearbeitungseinrichtung ist eine Belegestation zwischen dem ersten und dem zweiten Ende des Längsträgers sowie in der Nähe zum Längsträger angeordnet, eine Bearbeitungsstation am ersten Ende des Längsträgers in der Nähe zum Längsträger und weiter eine Ausförderstation am zweiten Ende des Längsträgers in der Nähe zum Längsträger. Der Längsträger weist dabei zumindest ein erstes Führungselement und ein zweites Führungselement auf, wobei einem ersten Führungselement beweglich angebrachtes Förderelement, das Spannelemente aufweist, und eingerichtet ist, ein Werkstück aufzunehmen und gegebenenfalls zu halten, sowie ein am zweiten Führungselement beweglich angebrachtes zweites Förderelement, das Spannelemente aufweist, und ein Werkstück aufnehmen und gegebenenfalls halten kann, vorgesehen ist.

Diese Anordnung hat den Vorteil, dass in der mittig gelegenen Belegestation zwischen dem ersten und dem zweiten Ende des Längsträgers ein Werkstück in ein zweites Förderelement beschickt werden kann, während sich ein erstes Förderelement mit einem bereits beschickten Werkstück im Bereich einer Bearbeitungsstation befindet. Sind nun der Bearbeitungsvorgang sowie der Beschickungsvorgang beendet, so kann sich das erste Förderelement zu einer weiteren Station, beispielsweise einer Ausförderstation, bewegen, während das zweite Förderelement das zweite Werkstück zur Bearbeitungsstation fördert. In der Ausförderstation wird das erste Werkstück vom ersten Förderelement getrennt, und das erste Förderelement wiederum zur Mitte gelegenen Beschickungsstation gebracht. Dort wird erneut ein neues Werkstück aufgenommen, während das zweite Förderelement das zweite Werkstück im Bereich der Bearbeitungsstation hält.

Auf diese Weise kann die Taktzeit pro Werkstück deutlich erhöht werden. Mit anderen Worten werden die Nebenzeiten der Bearbeitungswerkzeuge und der Förderelemente auf ein Minimum reduziert. Des Weiteren kann eine kombinierte Förderung und Bearbeitung durchgeführt werden, ohne dass die das Werkstück haltenden Förderelemente miteinander oder mit anderen Bearbeitungswerkzeugen kollidieren. Des Weiteren kann optimal der zur Verfügung stehende Platz für die kombinierte Förder-und Bearbeitungseinrichtung ausgenutzt werden. Insgesamt gesehen hat die erfindungsgemäße Vorrichtung den Vorteil, ein Werkstück nach einmaligem Spannen zu verschiedenen Stationen zu fördern und dort ohne Umspannen zu bearbeiten, wobei die Spannelemente mit einem Minimum an Nebenzeit (also ohne Werkstück) im Einsatz sind.

Dabei ist es besonders bevorzugt, dass bei der erfindungsgemäßen kombinierten Förder- und Bearbeitungseinrichtung das erste Führungselement und das zweite Führungselement in vertikaler Richtung voneinander beabstandet sind. Somit kann das erste Förderelement, welches am ersten Führungselement angebracht ist, und das zweite Förderelement, welches am zweiten Führungselement angebracht ist, aneinander vorbei bewegt werden und somit unabhängig voneinander jeden Ort des jeweiligen Führungselements erreichen.

Weiter ist es bevorzugt vorgesehen, dass die Spannelemente der jeweiligen Förderelemente jeweils eine Auflagefläche und eine Spannfläche aufweisen. Mit Hilfe der Auflagefläche kann das Werkstück gegen ein Verrutschen in vertikaler Richtung gesichert werden, während die Spannflächen der jeweiligen Spannelemente eines Förderelements gegeneinander gerichtet sind, so dass ein Werkstück bei einer Bewegung der Spannelemente gegeneinander zwischen den jeweiligen Spannflächen der Spannelemente aufgenommen und gehalten wird.

Die kombinierte Förder- und Bearbeitungseinrichtung ist in einer weiteren Ausführungsform **dadurch gekennzeichnet, dass** die Belegestation in vertikaler Richtung verfahrbar ist. Somit kann sichergestellt werden, dass ein zu beschickendes Werkstück in eine Beschickungsposition gefördert wird, ohne dabei den Verfahrweg der Förderelemente zu behindern. Zur Beschickung wird die Belegestation dann angehoben und das zu beschickende Werkstück von den Spannelementen eines Förderelements aufgenommen und gespannt.

In einer weiteren Ausführungsform ist die erfindungsgemäße Vorrichtung **dadurch gekennzeichnet, dass** die Ausförderstation in vertikaler Richtung verfahrbar ist und Förderelemente zum Ausfördern der bearbeiteten Werkstücke aufweisen kann. Somit behindert Ausförderstation wiederum den Bewegungsbereich der Förderelemente nicht und kann erste beim tatsächlichen Ausfördervorgang in eine Ausförderposition verfahren werden. Die Förderelemente an der Ausförderstation stellen sicher, dass ein bearbeitetes Werkstück ausgefördert werden kann.

Weiter ist die kombinierte Förder- und Bearbeitungseinrichtung in einer weiteren Ausführungsform **dadurch gekennzeichnet, dass** im Bereich der Ausförderstation weitere Bearbeitungswerkzeuge vorgesehen sind. Vorteilhafterweise sind dies Bearbeitungswerkzeuge, mit denen beispielsweise Beschläge aufgebracht werden. Es können aber auch weitere Bohr- oder Fräswerkzeuge vorhanden sein. Somit können kurz vor oder während dem Ausfördern eines Werkstücks abschließende Bearbeitungsschritte durchgeführt werden.

Durch die kombinierte Förder- und Bearbeitungseinrichtung kann weiter ein erfindungsgemäßes Verfahren zum Fördern und Bearbeiten von bevorzugt plattenförmigen Werkstücken durchgeführt werden. Das erfindungsgemäße Verfahren weist dabei die folgenden Schritte auf:

Beschicken eines Werkstücks mittels einer Belegestation, damit ein erstes Förderelement das Werkstück aufnehmen kann, Fördern des einen Werkstücks zu einer ersten äußeren Position, Bearbeiten des einen Werkstücks mittels eines Bearbeitungsaggregats, während ein weiteres Werkstück mittels der Belegestation zu einem zweiten Förderelement beschickt wird, Fördern des einen Werkstücks zu einer Ausförderstation, während ein weiteres Werkstück zum Bearbeitungsaggregat gefördert und dort bearbeitet wird.

Das erfindungsgemäße Verfahren ist in einer Ausführungsform **dadurch gekennzeichnet, dass** die Belegestation 10 zum Beschicken eines Werkstücks in vertikaler Richtung bewegt wird. Am Ende dieser vertikalen Bewegung befindet sich das zu beschickende Werkstück somit in einer Ebene, wo es vom ersten Förderelement aufgenommen werden kann. Nachdem das Werkstück durch das erste Förderelement aufgenommen wurde, wird die

Belegestation wiederum in vertikaler Richtung abwärts bewegt, so dass das Förderelement nicht mit der Belegstation kollidieren kann.

Somit ist es bevorzugt, dass das Spannelemente aufweisende Förderelement das aufzunehmende Werkstück an zumindest zwei Längsseiten hiervon aufnimmt und hält. Besonders bevorzugt ist es dabei, dass jedes Spannelement eine Auflagefläche und eine Spannfläche aufweist. Somit liegt das Werkstück bei sich schließenden Zangen auf der Auflagefläche auf, und wird durch die Spannfläche gespannt.

Darüber hinaus ist es bevorzugt, dass sich die Spannelemente des Förderelements in einer Richtung gegeneinander bewegen, um das aufzunehmende Werkstück zu spannen.

Weiter ist es bevorzugt vorgesehen, dass die Ausförderstation nach Aufnahme eines Werkstücks in vertikaler Richtung nach unten verfahren wird, damit das Werkstück ausgefördert werden kann. Nachdem die Ausförderstation in vertikaler Richtung nach unten verfahren wurde, kann sie nicht mehr mit einem der Förderelemente kollidieren.

In einer weiteren bevorzugten Ausführungsform wird ein Werkstück im Bereich der Ausförderstation mittels weiterer Bearbeitungswerkzeuge bearbeitet. Dies können beispielsweise Bearbeitungswerkzeuge zum Aufbringen von Beschlägen auf die bevorzugt plattenförmigen Werkstücke sein, aber auch Werkzeuge zur Nachbearbeitung der Werkstücke sind denkbar. Somit wird die Ausförderstation gleichzeitig als eine weitere Bearbeitungsstation genutzt. Die Verfahrensschritte des Ausförderns mit einer weiteren Bearbeitung zu kombinieren trägt dazu bei die Taktzeit pro Werkstück weiter zu erhöhen.

In einer weiteren bevorzugten Ausführungsform kann die Bearbeitung eines Werkstücks mittels mehrer Bearbeitungsaggregate durchgeführt werden, wobei diese

Bearbeitungsaggregate unabhängig voneinander verfahrbar sind. Die Kombination mehrerer Bearbeitungsaggregate in dem Bearbeitungsraum verkürzt die Bearbeitungszeit pro Werkstück, so dass dieses recht schnell wieder ausgefördert werden kann und im Gegenzug ein weiteres Werkstück in den Bearbeitungsraum geführt werden kann.

### Kurze Beschreibung der Figuren

- Fig. 1: stellt eine erste Phase eines beispielhaften Verfahrensablaufs mittels der erfindungsgemäßen Vorrichtung dar.
- Fig. 2: stellt eine zweite Phase eines beispielhaften Verfahrensablaufs mittels der erfindungsgemäßen Vorrichtung dar.
- Fig. 3: stellt eine dritte Phase eines beispielhaften Verfahrensablaufs mittels der erfindungsgemäßen Vorrichtung dar.
- Fig. 4: stellt eine vierte Phase eines beispielhaften Verfahrensablaufs mittels der erfindungsgemäßen Vorrichtung dar.
- Fig. 5: stellt eine fünfte Phase eines beispielhaften Verfahrensablaufs mittels der erfindungsgemäßen Vorrichtung dar.

### Detaillierte Beschreibung der bevorzugten Ausführungsformen

Nachfolgend wird beispielhaft ein Verfahrensablauf beschrieben, welcher mit Hilfe der erfindungsgemäßen kombinierten Förder- und Bearbeitungseinrichtung 1 durchgeführt werden kann.

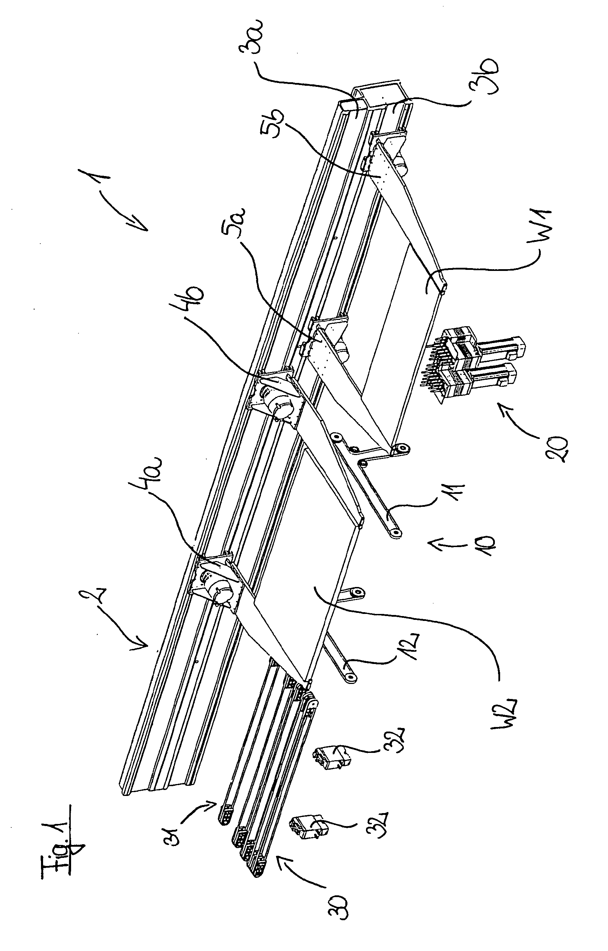

Fig. 1 zeigt eine Ausführungsform der erfindungsgemäßen kombinierten Förder- und Bearbeitungseinrichtung 1 für vorzugsweise plattenförmige Werkstücke. Dabei weist die erfindungsgemäße Einrichtung einen Längsträger 2 mit einem ersten und einem zweiten Ende auf, welcher Längsträger zumindest ein erstes Führungselement 3a und ein zweites Führungselement 3b aufweist. Sowohl das erste Führungselement 3a als auch das zweite Führungselement 3b ist in dieser Ausführungsform als Schiene ausgebildet, um auf dem ersten Führungselement 3a ein erstes Förderelement bestehend aus zwei Spannelementen 4a, 4b, und auf dem zweiten Führungselement 3b ein zweites Förderelement bestehend aus zwei Spannelementen 5a, 5b in einer translatorischen Richtung zu bewegen. Die Bewegungsrichtung ist dabei im Wesentlichen horizontal. Beide Führungselemente 3a, 3b sind derart am Längsträger 2 angeordnet, dass die Führungselemente 3a, 3b in vertikaler Richtung voneinander beabstandet sind, so dass die jeweiligen Spannelemente 4a, 4b, 5a, 5b unabhängig voneinander in jede Position des jeweiligen Führungselements verfahrbar sind. Mit anderen Worten können die Spannelemente zu keiner Zeit miteinander kollidieren.

Weiter weist die kombinierte Förder- und Bearbeitungseinrichtung 1 eine Belegestation 10 zwischen dem ersten und dem zweiten Ende des Längsträgers 2 auf. Vorteilhafterweise ist die Belegestation 10 wie in Fig. 1 zu sehen im Wesentlichen in der Mitte sowie in der Nähe des Längsträgers 2 angeordnet. Somit kann mit Hilfe der Belegestation 10 ein Werkstück in die Nähe des Längsträgers 2 gefördert werden.

In Fig. 1 ist eine Situation dargestellt, in der die Belegestation 10 ein Werkstück W2 in die Nähe des Längsträgers 2 gefördert hat, wo dieses Werkstück W2 von den beiden Spannelementen 4a, 4b aufgenommen wurde. Die Belegestation 10 wurde anschließend wiederum in vertikaler Richtung nach unten bewegt, so dass sie weder mit den Spannelementen 4a, 4b noch mit den Spannelementen 5a, 5b oder einem der Werkstücke kollidieren kann. In der dargestellten Ausführungsform weist die Belegestation 10 zwei Förderbänder 11, 12 auf, die in horizontaler Richtung derart voneinander beabstandet sind, dass ein Werkstück sicher damit gefördert werden kann.

Weiter ist in Fig. 1 eine Bearbeitungsstation 20 am ersten Ende des Längsträgers 2 in der Nähe zum Längsträger 2 abgebildet. Mit Hilfe der Bearbeitungsstation 20 können in deren Bereich die Werkstücke in vertikaler Richtung von unten bearbeitet werden. In Fig. 1 ist weiter ein Werkstück W1 abgebildet, welches Werkstück W1 während der Bearbeitung mit Hilfe der Spannelemente 5a, 5b gehalten wird.

Weiter weist die erfindungsgemäße kombinierte Förder- und Bearbeitungseinrichtung 1 eine Ausförderstation 30 am zweiten Ende des Längsträgers 2 in der Nähe zum Längsträger 2 auf. In der dargestellten Ausführungsform umfasst die Ausförderstation 30 ein als Bandförderer ausgebildetes Förderelement 31 auf, um die auszufördernden Werkstücke in horizontaler Richtung zu bewegen. Weiter sind unterhalb des Fördermechanismus 31 Bearbeitungsaggregate 32 vorgesehen, um die Werkstücke abschließend mit Beschlägen/Funktionsbauteilen zu versehen. Auch die Ausförderstation 30 ist wie die Belegestation 10 in vertikaler Richtung beweglich, so dass ein auf dem Fördermechanismus 31 aufgelegtes Werkstück abwärts bewegt werden kann. Somit kommt es zu keiner Kollision mit einem der Förderelemente, also mit einem der Spannelemente 4a, 4b, 5a, 5b.

Betrachtet man nun die gesamte Förder- und Bearbeitungseinrichtung 1 gemäß der dargestellten Ausführungsform, so ergibt sich folgender Aufbau: Mittig zum Längsträger 2 angeordnet weist die erfindungsgemäße Einrichtung 1 eine Belegestation 10 auf, während am ersten Ende des Längsträgers 2 eine Bearbeitungsstation 20 vorgesehen ist. In Fig. 1 ist dieses erste Ende auf der rechten Seite des Längsträgers 2. Am zweiten Ende des Längsträgers 2 ist eine Ausförderstation 30 vorgesehen. In Fig. 1 ist das zweite Ende des Längsträgers 2 auf der linken Seite des Längsträgers 2 vorgesehen. Allerdings sei angemerkt, dass die Bearbeitungsstation 20 und die Ausförderstation 30 auch entgegengesetzt zu der in Fig. 1 dargestellten Ausführungsform angeordnet sein können, ohne die Funktionsweise der erfindungsgemäßen kombinierten Förder-und Bearbeitungseinrichtung einzuschränken.

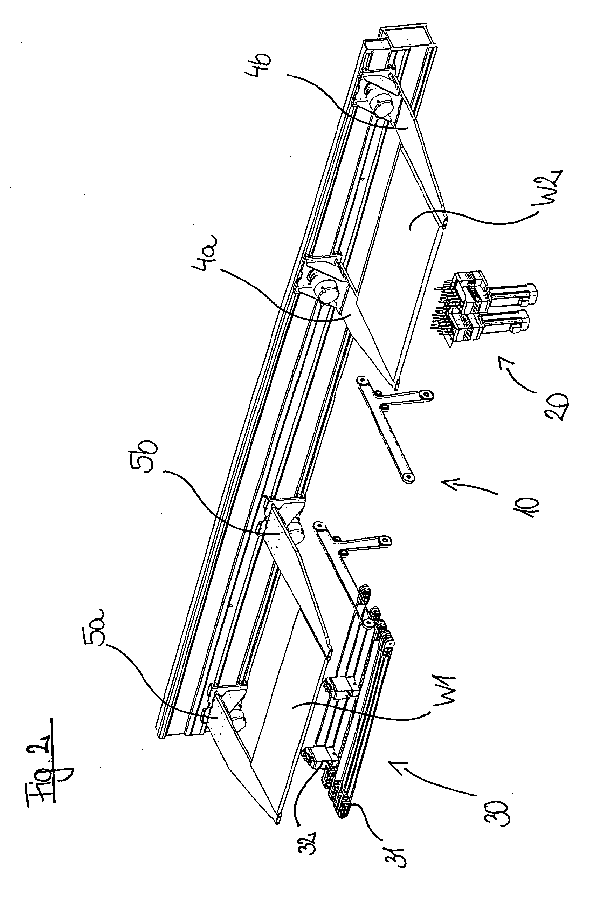

Die nachfolgenden Figuren 2-5 stellen nun weitere Situationen im erfindungsgemäßen Verfahren dar, wobei verschiedene Werkstücke an verschiedenen Stationen der erfindungsgemäßen Einrichtung gezeigt sind, sowie die einzelnen Elemente unterschiedliche Positionen annehmen können.

Gegenüber der Fig. 1 wurde das Werkstück W2 zur Bearbeitungsstation 20 gefördert und kann hier bearbeitet werden. Das in Fig. 1 dargestellte Werkstück W1 wurde unterdessen unabhängig vom Fördern des Werkstücks W2 zur Ausförderstation 30 bewegt, wobei der Fördermechanismus 31 in der abgesenkten Position dargestellt ist. Somit kann das Werkstück W1 vor dem Ausfördern mit Hilfe der Bearbeitungswerkzeuge 32 bearbeitet werden.

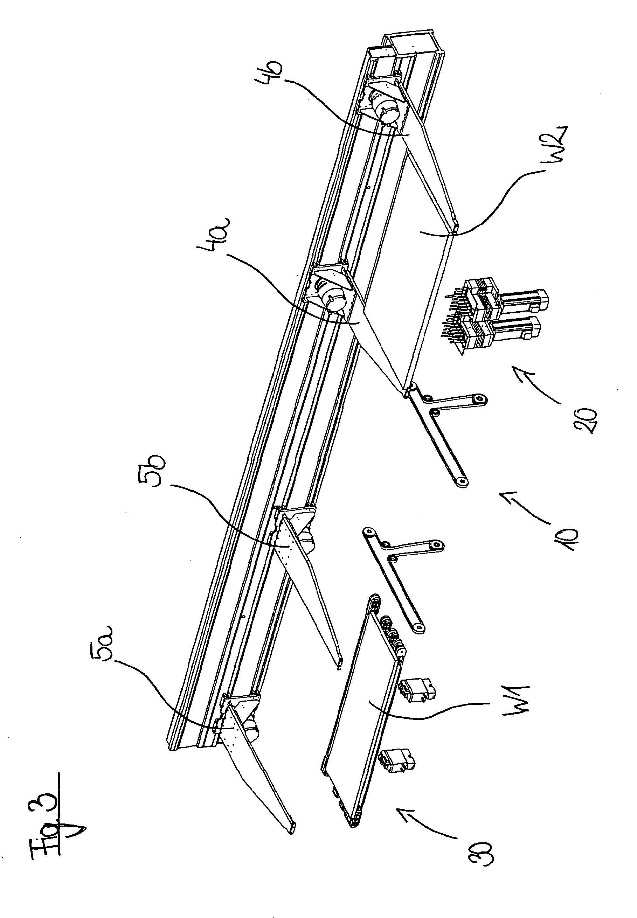

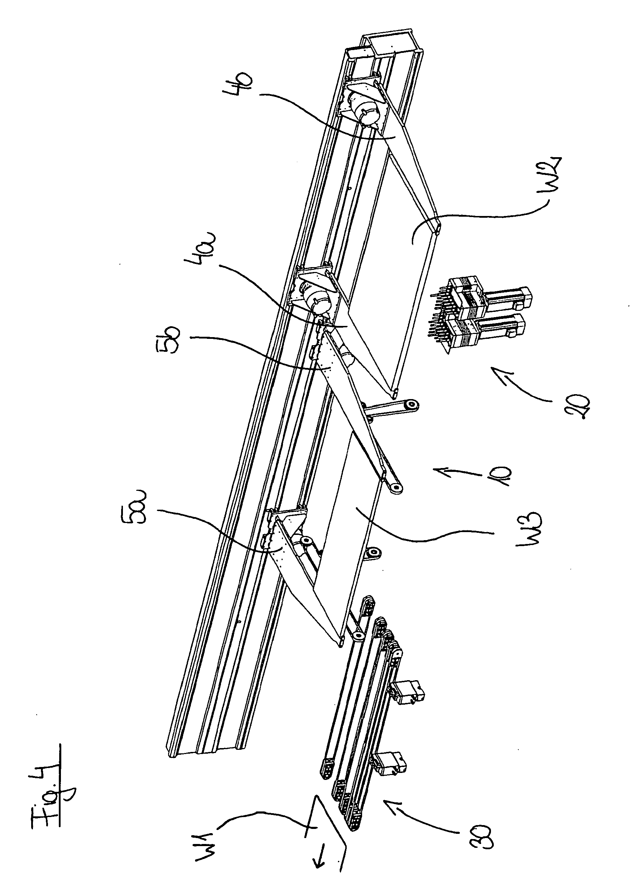

Weiter ist nun in Fig. 3 zu erkennen, dass das Werkstück W1 nach der Bearbeitung auf dem Fördermechanismus 31 aufgelegt wurde, und dieser wiederum in der abgesenkten Position dargestellt ist. Somit kann das Werkstück W1 nun ausgefördert werden. Unterdessen befindet sich das Werkstück W2 weiterhin im Bereich der Bearbeitungsstation und wird bearbeitet. Nachdem nun das Werkstück W1 ausgefördert wurde (in Fig. 4 durch einen Pfeil angedeutet), und sich das Werkstück W2 weiterhin im Bereich der Bearbeitungsstation befindet, ist in Fig. 4 ein neues Werkstück W3 zu erkennen. Dieses Werkstück W3 wurde mit Hilfe der Belegestation 10 derart befördert, dass es mit Hilfe der Spannelemente 5a, 5b aufgenommen werden kann.

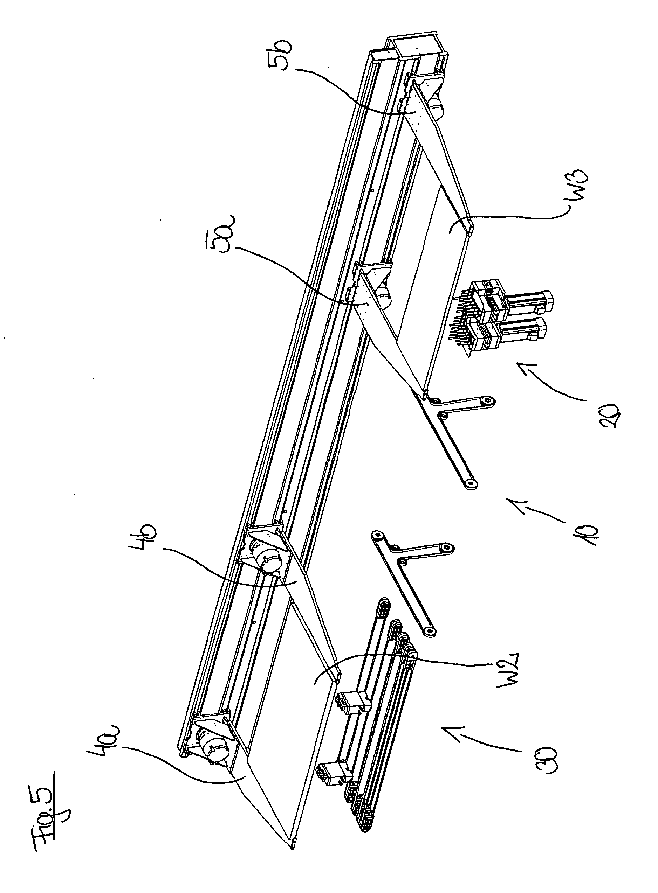

Abschließend ist in Fig. 5 eine weitere Situation im erfindungsgemäßen Verfahrensablauf dargestellt. Dabei befindet sich das neu beschickte Werkstück W3 im Bereich der Bearbeitungsstation 20, während das Werkstück W2 bereits in dem Bereich der Ausförderstation 30 gefördert wurde. Somit entspricht die in Fig. 5 dargestellte Situation im Wesentlichen der in Fig. 2 gezeigten, wobei die jeweiligen Spannelementenpaare 4a, 4b, und 5a, 5b mit den entsprechenden Werkstücken an gegengleichen Positionen gelegen sind.

Es sei abschließend angemerkt, dass die Anordnung der Bearbeitungsstation sowie der Ausförderstation im Bezug auf die Enden des Längsträgers 2 selbstverständlich auch anders angeordnet werden können, ohne das erfindungsgemäße Verfahren ausführen zu können. Weiter sind die an den jeweiligen Spannelementen 4a, 4b, 5a, 5b vorgesehenen Antriebselemente in der dargestellten Ausführungsform als unabhängige Elektromotoren ausgeführt. Zum translatorischen Fördern der Spannelementen 4a, 4b, 5a, 5b sind z.B. auch Linearantriebe denkbar.

Die Bearbeitungsvarianten in der Bearbeitungsstation 20 können vielfältig sein. Nachdem es sich um plattenförmige Werkstücke handelt, ist eine Bohr- oder Fräsbearbeitung von der Unter- oder Oberseite bevorzugt. Allerdings ist eine Bearbeitung der freien Kanten außerhalb der Spannelemente ebenfalls denkbar.

## Patentansprüche

1. Kombinierte Förder- und Bearbeitungseinrichtung (1) für im Wesentlichen plattenförmige Werkstücke aus bevorzugt Holz, Holzwerkstoffen, Kunststoff oder Metallen, wobei die Förder- und Bearbeitungseinrichtung aufweist:
einen Längsträger (2) mit einem ersten und einem zweiten Ende, welcher Längsträger zumindest ein erstes Führungselement (3a) und ein zweites Führungselement (3b) aufweist,
ein am ersten Führungselement (3a) beweglich angebrachtes erstes Förderelement, das Spannelemente (4a, 4b) aufweist, und eingerichtet ist, ein Werkstück aufnehmen und gegebenenfalls halten kann, sowie
ein am zweiten Führungselement (3b) beweglich angebrachtes zweites Förderelement, das Spannelemente (5a, 5b) aufweist und ein Werkstück (W1, W2) aufnehmen und gegebenenfalls halten kann,
wobei jedes der Förderelemente eingerichtet ist, unabhängig vom anderen Förderelement an jede Position des jeweiligen Führungselements (3a, 3b) verfahrbar zu sein,
eine Belegestation (10) zum Beschicken eines Werkstücks zu entweder dem ersten oder zweiten Förderelement eine Bearbeitungsstation (20) mit einem Bearbeitungsaggregat am ersten Ende des Längsträgers (2) in der Nähe zum Längsträger (2), sowie
eine Ausförderstation (30), am zweiten Ende des Längsträgers (2) in der Nähe zum Längsträger (2),
**dadurch gekennzeichnet, dass**
die Belegestation (10) zwischen dem ersten und dem zweiten Ende des Längsträgers (2), und somit zwischen der Bearbeitungsstation (20) und der Ausförderstation (30), in der Nähe zum Längsträger (2) vorgesehen ist.

2. Kombinierte Förder- und Bearbeitungseinrichtung (1) gemäß Anspruch 1, **dadurch gekennzeichnet, dass** das erste Führungselement (3a) und das zweite Führungselement (3b) in vertikaler Richtung voneinander beabstandet sind.

3. Kombinierte Förder- und Bearbeitungseinrichtung (1) gemäß Anspruch 1 oder 2, **dadurch gekennzeichnet, dass** die Spannelemente (4a, 4b, 5a, 5b) jeweils eine Auflagefläche (X) und eine Spannfläche (X) aufweisen.

4. Kombinierte Förder- und Bearbeitungseinrichtung (1) gemäß einem der Ansprüche 1 bis 3, **dadurch gekennzeichnet, dass** die Belegestation (10) in vertikaler Richtung verfahrbar ist.

5. Kombinierte Förder- und Bearbeitungseinrichtung (1) gemäß einem der Ansprüche 1 bis 4, **dadurch gekennzeichnet, dass** die Ausförderstation (30) in vertikaler Richtung verfahrbar ist und Förderelemente zum Ausfördern der bearbeiteten Werkstücke aufweisen kann.

6. Kombinierte Förder- und Bearbeitungseinrichtung (1) gemäß einem der Ansprüche 1 bis 5, **dadurch gekennzeichnet, dass** im Bereich der Ausförderstation (30) weitere Bearbeitungswerkzeuge vorgesehen sind.

7. Verfahren zum Fördern und Bearbeiten von bevorzugt plattenförmigen Werkstücken, wobei das Verfahren die folgenden Schritte aufweist:
Beschicken eines Werkstücks (W1) mittels einer Belegestation (10), damit ein erstes Förderelement (4a, 4b) das Werkstück zwischen einer Bearbeitungsstation (20) und einer Ausförderstation (30) aufnehmen kann,
Fördern des einen Werkstücks (W1) zu einer ersten äußeren Position,
Bearbeiten des einen Werkstücks (W1) mittels eines Bearbeitungsaggregats an einer Bearbeitungsstation (20), während ein weiteres Werkstück (W2) mittels der Belegestation (10) zu einem zweiten Förderelement (5a, 5b) beschickt wird,
Fördern des einen Werkstücks (W1) zu einer an einer weiteren äußeren Position befindlichen Ausförderstation (30), während ein weiteres Werkstück zum Bearbeitungsaggregat an der Bearbeitungsstation (20) gefördert und dort bearbeitet wird.

8. Verfahren nach Anspruch 7, **dadurch gekennzeichnet, dass** die Belegestation (10) zum Beschicken eines Werkstücks in vertikaler Richtung bewegt wird.

9. Verfahren nach Anspruch 7 oder 8, **dadurch gekennzeichnet, dass** das Spannelemente aufweisende Förderelement das aufzunehmende Werkstück an zumindest zwei Längsseiten hiervon aufnimmt und gegebenenfalls hält.

10. Verfahren nach einem der Ansprüche 7-9, **dadurch gekennzeichnet, dass** sich die Spannelemente (4a, 4b, 5a, 5b) des Förderelements in einer Richtung gegeneinander bewegen, um das aufzunehmende Werkstück zu spannen

11. Verfahren nach einem der Ansprüche 7-10, **dadurch gekennzeichnet, dass** die Ausförderstation (30) nach Aufnahme eines Werkstücks in vertikaler Richtung nach unten verfahren wird, damit das Werkstück ausgefördert werden kann.

12. Verfahren nach einem der Ansprüche 7-11, **dadurch gekennzeichnet, dass** ein Werkstück im Bereich der Ausförderstation (30) mittels weiterer Bearbeitungswerkzeuge (32) bearbeitet.

13. Verfahren nach einem der Ansprüche 7-12, **dadurch gekennzeichnet, dass** die Bearbeitung im Bereich der Bearbeitungsstation (20) mittels mehrerer Bearbeitungswerkzeuge gleichzeitig durchgeführt wird.

## Claims

1. Combined conveying and processing facility (1) for substantially board-like workpieces preferably made of wood, derived timber products, plastic or metals, wherein the conveying and processing facility has:
a longitudinal beam (2) having a first and a second end, which longitudinal beam has at least one first guide element (3a) and one second guide element (3b),
a first conveying element which is mounted movably on the first guide element (3a) and which has clamping elements (4a, 4b) and can receive and, if occasion arises, hold a workpiece (W1, W2), and
a second conveying element which is mounted movably on the second guide element (3b) and which has clamping elements (5a, 5b) and can receive and, if occasion arises, hold a workpiece (W1, W2),
wherein each of the conveying elements is designed to be movable to any position of the respective guide element (3a, 3b), independently of the other conveying element,
an allocating station (10) for supplying a workpiece to either the first or the second conveying element,
a processing station (20) having a processing unit at the first end of the longitudinal beam (2) in the vicinity of the longitudinal beam (2), and
a discharge station (30), at the second end of the longitudinal beam (2) in the vicinity of the longitudinal beam (2),
**characterised in that**
the allocating station (10) is provided between the first and second ends of the longitudinal beam (2), and therefore between the processing station (20) and the discharge station (30), in the vicinity of the longitudinal beam (2).

2. Combined conveying and processing facility (1) according to claim 1, **characterised in that** the first guide element (3a) and the second guide element (3b) are spaced apart from each other in a vertical direction.

3. Combined conveying and processing facility (1) according to claim 1 or 2, **characterised in that** the clamping elements (4a, 4b, 5a, 5b) in each case have a supporting surface (X) and a clamping surface (X).

4. Combined conveying and processing facility (1) according to any of claims 1 to 3, **characterised in that** the allocating station (10) is movable in a vertical direction.

5. Combined conveying and processing facility (1) according to any of claims 1 to 4, **characterised in that** the discharge station (30) is movable in a vertical direction and can have conveying elements for discharging the workpieces which have been processed.

6. Combined conveying and working facility (1) according to any of claims 1 to 5, **characterised in that** further processing tools are provided in the region of the discharge station (30).

7. Method for conveying and processing preferably board-like workpieces, wherein the method has the following steps:
supplying a workpiece (W1) by means of an allocating station (10), so that a first conveying element (4a, 4b) can receive the workpiece between a processing station (20) and a discharge station (30),
conveying the one workpiece (W1) to a first outer position,
processing the one workpiece (W1) by means of a processing unit at a processing station (20), while a further workpiece (W2) is supplied by means of the allocating station (10) to a second conveying element (5a, 5b),
conveying the one workpiece (W1) to a discharge station (30) located in a further outer position, while a further workpiece is conveyed to the processing unit at the processing station (20) and there processed.

8. Method according to claim 7, **characterised in that** the allocating station (10) for supplying a workpiece is moved in a vertical direction.

9. Method according to claim 7 or 8, **characterised in that** the conveying element which has clamping elements receives and, if occasion arises, holds the workpiece to be received on at least two longitudinal sides thereof.

10. Method according to any of claims 7-9, **characterised in that** the clamping elements (4a, 4b, 5a, 5b) of the conveying element move in a direction towards each other in order to clamp the workpiece to be received.

11. Method according to any of claims 7-10, **characterised in that** the discharge station (30) after receiving a workpiece is moved in a vertical direction downwardly, so that the workpiece can be discharged.

12. Method according to any of claims 7-11, **characterised in that** a workpiece is processed in the region of the discharge station (30) by means of further processing tools (32).

13. Method according to any of claims 7-12, **characterised in that** processing is carried out in the region of the processing station (20) by means of several processing tools simultaneously.

## Revendications

1. Dispositif combiné de transport et d'usinage (1) pour des pièces globalement en forme de plaques de préférence en bois, en dérivés de bois, en plastiques ou en métaux, le dispositif de transport et d'usinage comportant :
- un support longitudinal (2) avec une première extrémité et avec une seconde extrémité, lequel support longitudinal comporte au moins un premier élément de guidage (3a) et un second élément de guidage (3b),
- un premier élément de transport qui est monté mobile sur le premier élément de guidage (3a), qui comporte des éléments de serrage (4a, 4b) et qui est conçu pour pouvoir recevoir une pièce et la tenir le cas échéant, ainsi que
- un second élément de transport qui est monté mobile sur le second élément de guidage (3b), qui comporte des éléments de serrage (5a, 5b) et qui peut recevoir une pièce (W1, W2) et la tenir le cas échéant,
chacun des éléments de transport étant conçu pour pouvoir être déplacé indépendamment de l'autre élément de transport en toute position de l'élément de guidage respectif (3a, 3b),
- un poste de chargement (10) pour charger une pièce soit sur le premier élément de transport soit sur le second élément de transport,
- un poste d'usinage (20) avec une machine d'usinage à la première extrémité du support longitudinal (2) à proximité du support longitudinal (2), ainsi que
- un poste d'enlèvement (30) à la seconde extrémité du support longitudinal (2) à proximité du support longitudinal (2),
**caractérisé en ce que**
- le poste de chargement (10) est prévu entre la première et la seconde extrémité du support longitudinal (2) et donc entre le poste d'usinage (20) et le poste d'enlèvement (30), à proximité du support longitudinal (2).

2. Dispositif combiné de transport et d'usinage (1) selon la revendication 1, **caractérisé en ce que** le premier élément de guidage (3a) et le second élément de guidage (3b) sont à une certaine distance l'un de l'autre en direction verticale.

3. Dispositif combiné de transport et d'usinage (1) selon la revendication 1 ou 2, **caractérisé en ce que** les éléments de serrage (4a, 4b, 5a, 5b) comportent chacun une surface d'appui (X) et une surface de serrage (X).

4. Dispositif combiné de transport et d'usinage (1) selon l'une des revendications 1 à 3, **caractérisé en ce que** le poste de chargement (10) peut être déplacé en direction verticale.

5. Dispositif combiné de transport et d'usinage (1) selon l'une des revendications 1 à 4, **caractérisé en ce que** le poste d'enlèvement (30) peut être déplacé en direction verticale et peut comporter des éléments de transport pour enlever les pièces usinées.

6. Dispositif combiné de transport et d'usinage (1) selon l'une des revendications 1 à 5, **caractérisé en ce que** d'autres outils d'usinage sont prévus dans la zone du poste d'enlèvement (30).

7. Procédé pour transporter et usiner des pièces de préférence en forme de plaques, le procédé comportant les étapes suivantes :
- chargement d'une pièce (W1) au moyen d'un poste de chargement (10) pour qu'un premier élément de transport (4a, 4b) puisse recevoir la pièce entre un poste d'usinage (20) et un poste d'enlèvement (30),
- transport de la pièce (W1) jusqu'à une première position extérieure,
- usinage de la pièce (W1) au moyen d'une machine d'usinage dans un poste d'usinage (20) pendant qu'une autre pièce (W2) est chargée au moyen du poste de chargement (10) sur un second élément de transport (5a, 5b),
- transport de la pièce (W1) jusqu'à un poste d'enlèvement (30) situé à une autre position extérieure pendant qu'une autre pièce est transportée jusqu'à la machine d'usinage (20) et est usinée là.

8. Procédé selon la revendication 7, **caractérisé en ce que** le poste de chargement (10) est mobile en direction verticale pour le chargement d'une pièce.

9. Procédé selon la revendication 7 ou 8, **caractérisé en ce que** l'élément de transport comportant des éléments de serrage prend la pièce à recevoir par au moins deux côtés longs de celle-ci et la tient le cas échéant.

10. Procédé selon l'une des revendications 7 à 9, **caractérisé en ce que** les éléments de serrage (4a, 4b, 5a, 5b) de l'élément de transport sont mobiles l'un par rapport à l'autre dans une direction pour serrer la pièce à recevoir.

11. Procédé selon l'une des revendications 7 à 10, **caractérisé en ce que**, après la réception d'une pièce, le poste d'enlèvement (30) est déplacé en direction verticale vers le bas pour que la pièce puisse être enlevée.

12. Procédé selon l'une des revendications 7 à 11, **caractérisé en ce qu'**une pièce est usinée au moyen d'autres outils d'usinage (32) dans la zone du poste d'enlèvement (30).

13. Procédé selon l'une des revendications 7 à 12, **caractérisé en ce que** l'usinage dans la zone du poste d'usinage (20) est effectué simultanément au moyen de plusieurs outils d'usinage.
